# EUROPEAN PATENT SPECIFICATION

(11) **EP 4 406 839 B1**
(45) Date of publication and mention of the grant of the patent: **25.02.2026**
(21) Application number: 24151180.7
(22) Date of filing: 10.01.2024
(51) Int. Cl.: B64D 11/02

(54) **LAVATORY ACCESS FOR PERSONS WITH REDUCED MOBILITY**
TOILETTENZUGANG FÜR PERSONEN MIT EINGESCHRÄNKTER MOBILITÄT
ACCÈS À DES TOILETTES POUR PERSONNES À MOBILITÉ RÉDUITE

(30) Priority: 30.01.2023 US 202318161607
(43) Date of publication of application: 31.07.2024
(73) Proprietor: B/E Aerospace, Inc., Winston-Salem, NC 27105 (US)
(72) Inventor: DOWTY, Mark B., Rural Hall, NC (US); SHOEMAKER, Dylan, Blacksburg, VA (US)
(74) Representative: Dehns

(56) References cited:
- WO-A1-2012/110643
- WO-A1-2014/154758
- US-A1- 2017 253 315
- US-A1- 2019 248 495
- US-B2- 9 561 854
- US-B2- 9 708 062

## Description

### FIELD

The present disclosure generally relates occupancy detection in lavatories, and more specifically to lavatory access for persons with reduced mobility.

### BACKGROUND

A lavatory complex installed in an aircraft may be located against an outboard wall portion of an aircraft passenger cabin as well as the rear of the aircraft abutting the pressure dome. For ease of manufacture and ease of installation adjacent other interior structures, aircraft lavatories typically have flat walls on all sides facing the aircraft interior as depicted by the lavatory envelope. Aircraft lavatories are typically located adjacent a doorway emergency exit path.

To provide a space for a crew member to stand by an emergency exit door for the purpose assisting passengers during an emergency evacuation of an aircraft, airworthiness authorities require that a 12-inch (30.48 centimeters) by 20-inch (50.8 centimeters) "assist space" be provided adjacent the aircraft exit doorway, alongside the exit path but outside the exit path itself. Attendant seats, occupied by flight attendants during takeoff, landing and at other times are typically mounted inboard of the assist spaces near the exit paths. The attendant seats most typically fold upward to a stowed position when not occupied so as to remain clear of the exit path.

Typical lavatories are configured with similar or identical water supply and sewage systems and structural layouts to minimize production cost and certification effort. Each lavatory may be a physically separate structural unit with a gap designed therebetween to minimize the possibility that the units will contact one another during flight and/or emergency landing situations.

A variety of techniques have been employed for transferring a mobility-impaired passenger between an aisle wheelchair and a toilet. A 90° transfer in which the aisle wheelchair is positioned at a 90° angle to the toilet and an assistant lifts the mobility-impaired passenger and rotates the passenger onto the toilet, and vice versa, has been found to reduce the risk of injury to the assistant and is, therefore, a favored method for assisted transfers. A lateral transfer, in which a mobility-impaired passenger slides sideways from wheelchair to toilet and vice versa can be favored for an unassisted transfer in which the mobility-impaired passenger prefers to make the transfer unaided and has the upper body strength to do so. US 2019/248495 A1 relates to a cabin module for an aircraft, comprising a space-saving sanitary unit with a toilet which offers improved user convenience for persons with restricted mobility. US 9 561 854 B2 discloses a toilet assembly for use by handicapped individuals in an aircraft cabin monument, wherein the toilet compartment door is retractable to a side facing away from a forward dividing flap that closes the compartment opening when the door is retracted. WO 2012/110643 A1 discloses a modular segment for a vehicle cabin, such as an aircraft, in which the outer lateral faces of adjacent segment modules are shaped to snugly fit against the inner wall of the cabin. US 2017/253315 A1 discloses an arrangement in a vehicle cabin with a cabin monument provided with two access openings located at two aisles, the openings forming an intersection.

### SUMMARY

Disclosed herein is an aircraft lavatory, as defined in claim 1.

Optional embodiments are defined by the dependent claims.

The foregoing features and elements may be combined in any combination, without exclusivity, unless expressly indicated herein otherwise, insofar as they fall within the scope of the appended claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a partial top view of an aircraft cabin with exemplary lavatory monuments, in accordance with various embodiments.
FIG. 2 illustrates a top view of a lavatory of a lavatory monument, in accordance with various embodiments.
FIG. 3 illustrates a top view of a lavatory with persons with reduced mobility (PRM) access via a PRM access door, in accordance with various embodiments.
FIGS. 4A and 4B illustrate an isometric view and a top view, respectively, of a lavatory with PRM access via a PRM access door, in accordance with various embodiments.
FIG. 5 illustrates an isometric view of a first positioning of a PRM mobility device to access a lavatory via a PRM access door, in accordance with various embodiments.
FIG. 6 illustrates an isometric view of a second positioning of a PRM mobility device to access a lavatory via a PRM access door, in accordance with various embodiments.
FIG. 7 illustrates an isometric view of a PRM in a PRM mobility device accessing a lavatory via a PRM access door, in accordance with various embodiments.
FIG. 8 illustrates an isometric view of a lavatory with PRM access via a PRM access door, in accordance with various embodiments.
FIGS. 9A and 9B illustrate an isometric view and a top view, respectively, of a lavatory with PRM access via a PRM access door, in accordance with various embodiments.
FIGS. 10A and 10B illustrate an isometric view and a side view, respectively, of a lavatory with PRM access via a PRM access door, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the appended claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Currently, lavatories for persons with reduced mobility (PRM) (e.g., disabled, elderly, injured, etc.) include an outboard folding movable center wall; however, such a movable center wall is difficult to fold and move. Furthermore, such lavatories are currently located in the center or rear of the aircraft. In various embodiments, in order to provide PRM access to a lavatory without the PRM mobility device, such as a wheelchair, electric wheelchair, or scooter, among others, entering the lavatory, such as those located at the front of the aircraft, disclosed herein is a system and methods for reconfiguring a side wall of a lavatory for PRM access the lavatory via a PRM access door while assistance is provided through a standard access door used for standard access to the lavatory. In that regard, in various embodiments, the standard access door is perpendicular to the PRM access door. In various embodiments, the side wall of the lavatory in which the PRM access door is located is a wall on which one or more flight attendant seats are located. In various embodiments, the PRM access door rotates about an axis. In various embodiments, the PRM access door rotates about the axis toward an outside of the aircraft. In various embodiments, the PRM access door rotates about the axis toward an inside of the aircraft. In various embodiments, the PRM access door translates on a linear slide toward a center of the aircraft. In that regard, in various embodiments, the linear slide utilizes a set of rails of a single rail mechanism. In various embodiments, the PRM access door and a wall in which the standard access door is located the standard access door are coupled together such that, when the PRM access door is accessed, the PRM access door and the wall in which the standard access door is located move together to provide PRM access. In various embodiments, the PRM access door translates via a 4-bar mechanism. In various embodiments, the PRM access door translates via a live hinge. In various embodiments, the PRM access door translates via an articulating linkage. In various embodiments, the PRM access door includes a discrete latching mechanism that may only be accessed by a flight attendant or authorized personnel. In various embodiments, the PRM access door incorporates a curtain or curtain attachment system to provide privacy during PRM access to the lavatory.

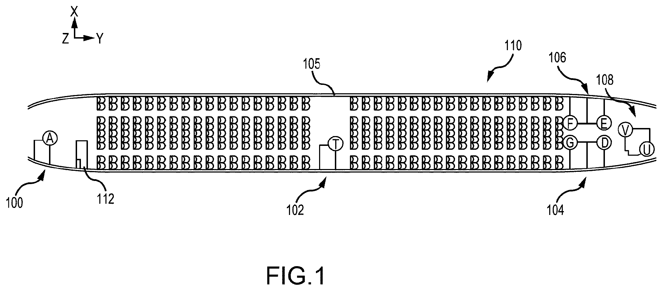

Referring now to FIG. 1, in accordance with various embodiments, a partial top view of an aircraft cabin with exemplary lavatory monuments is illustrated. In the depicted figure, numerous lavatory monuments 100, 102, 104, 106, and 108 are shown with certain lavatory monuments located along an outboard wall 105. Lavatory monument 100 is located approximately toward the front of the aircraft, lavatory monument 102 is located approximately in the middle of the fuselage (e.g., near a wing), and lavatory monuments 104, 106, and 108 are located toward the rear of an aircraft 110. The outboard wall 105 may be formed as a curved body of the fuselage of the aircraft 110.

Lavatory monument 100 is configured to provide PRM access to a lavatory without the PRM mobility device, such as a wheelchair, electric wheelchair, or scooter, among others, entering the lavatory monument 100. In various embodiments, a side wall of the lavatory monument 100 is reconfigured so that the PRM mobility device may be positioned in a space 111 between the lavatory monument 100 and a closet 112 located aft of the lavatory monument 100. In that regard, the PRM may transfer from the PRM mobility device to the lavatory via a PRM access door while assistance is provided through a first door used for standard access to the lavatory monument 100.

The lavatory monuments 104, 106, and 108 are a complex of two adjacent compartments separated by a divider wall. In various embodiments, the lavatory monuments 104, 106, and 108 may be selectively configurable from two separated compartments to a unified private lavatory space by selectively stowing the divider wall to provide a combined and enlarged space for persons with restricted mobility (PRM), or to provide room for an assistant to be in the lavatory space as an aid for the PRM. In various embodiments, the divider wall may be retracted to form the unified space, and then secured in an open position, for example, with floor and/or ceiling locks. In various embodiments, the retracted divider may form a barrier that may conveniently keep the assistant separated from a wet sink area. In various embodiments, the retracted divider may form a barrier that may advantageously protect the sink area from collision or abrasion from a wheelchair, for example.

In the various embodiments, an area between the lavatory monuments 104, 106, and 108 is an open area with sufficient space for maneuvering a PRM mobility device, for example, a wheelchair. Note that the drawing is not necessarily shown to scale and is merely illustrative of one possible configuration of the lavatory monuments 100, 102, 104, 106, and 108 in a cabin of the aircraft 110. Configuration of the aisle, cross aisle, passageway, and seats may be in any suitable arrangement that permits ingress and egress through either of the two doors provided in the lavatory monuments 104, 106, and 108. In various embodiments, the lavatory monument may be located in an aft portion of the aircraft (e.g., near the pressure dome), or in a forward portion of the aircraft (e.g., immediately aft of the cockpit).

In various embodiments, the lavatory monuments 104, 106, and 108, for example, may be designed for lateral installation, with the closed doors of the lavatory monuments 104, 106, and 108 facing forward or aft, depending on configuration in the fuselage. In various embodiments, the lavatory compartment doors (in the closed position) may be oriented to be parallel to an aisle, cross aisle, or passageway, such as the center aisle that runs longitudinally from front to aft in a commercial aircraft.

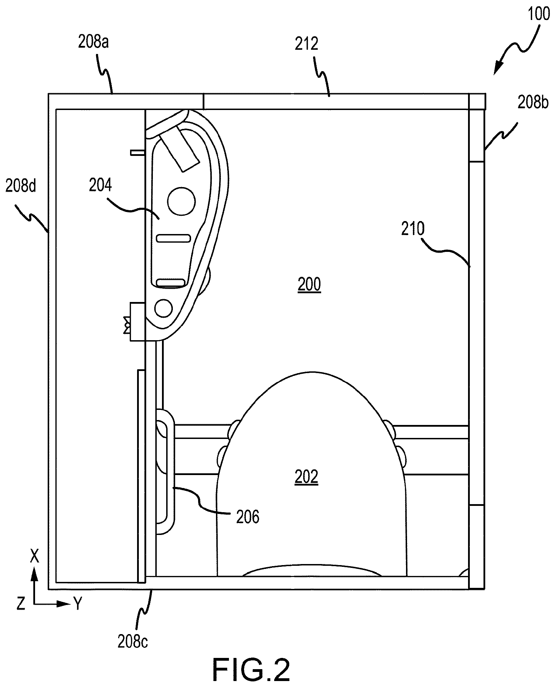

Referring now to FIG. 2, in accordance with various embodiments, a top view of a lavatory of the lavatory monument 100 is illustrated. In various embodiments, a lavatory 200 of the lavatory monument 100 includes a toilet 202 and a sink 204. In various embodiments, the lavatory 200 includes a stability bar 206, which is mounted for use as support in the lavatory 200. Lavatory 200 provides a first space for a person to move inside lavatory 200. The first space has a limited size and dimension constrained walls 208a, 208b, 208c, and 208d, toilet 202 and sink 204. Accordingly, lavatory 200 has, in the various embodiments, enough room for only one person to move about in a comfortable manner. Furthermore, if a person with reduced mobility enters lavatory 200, then an assistant. i.e., a second person, may not have sufficient space to assist the person on to toilet 202. Further, if the first person requires a wheelchair, there may be no room to accept the wheelchair within lavatory 200.

Accordingly, in various embodiments, the lavatory 200 is configured to provide PRM access to the lavatory 200 without the PRM mobility device, such as a wheelchair, electric wheelchair, or scooter, among others, entering the lavatory 200. In various embodiments, the wall 208b is configured with a PRM access door 210 with a width that is between 50 and 90 percent of a width of the wall 208b. In various embodiments, the wall 208b is configured with the PRM access door 210 with a width that is between 60 and 80 percent of a width of the wall 208b. In various embodiments, the wall 208b is configured with the PRM access door 210 with a width that is 70 percent of a width of the wall 208b. In that regard, when the PRM access door 210 is opened, the PRM access door 210 that is configured to provide an opening that allows the PRM to transfer from the PRM mobility device positioned in a space located aft of the lavatory 200 to the lavatory 200 via the PRM access door 210 while assistance is provided through standard access door 212 that is configured to provide an opening for assistance to be provided to the PRM. In various embodiments, the standard access door 212 is also configured to provide standard access to the lavatory 200. In that regard, the PRM access door 210 is perpendicular to the standard access door 212.

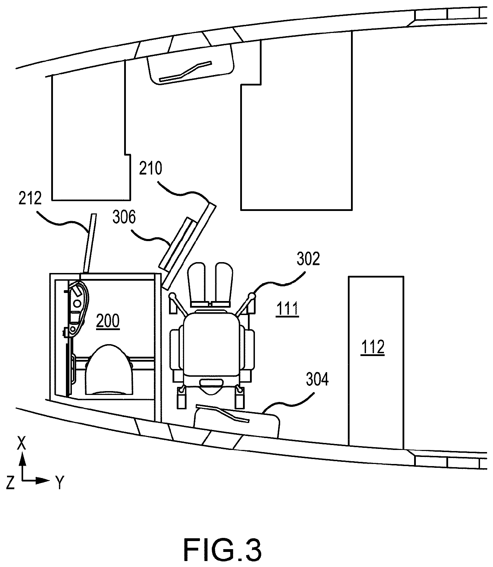

Referring now to FIG. 3, in accordance with various embodiments, a top view of a lavatory 200 with PRM access via a PRM access door 210 is illustrated. In various embodiments, lavatory 200 is configured to provide PRM access to the lavatory 200 via an opening provided via PRM access door 210 without the PRM mobility device 302 entering the lavatory 200. In various embodiment, the PRM access door 210 may have a flight attendant seat 306 attached thereto. In various embodiments, control of access to the PRM access door 210 may be limited to a flight attendant or other qualified personnel via a discrete latching mechanism. In that regard, once access to the PRM access door 210 is granted, the PRM may access the PRM access door 210 as needed. In various embodiments, in response to the PRM access door 210 being opened, as illustrated in FIG. 3, the PRM mobility device 302 may be positioned in a space 111 between the lavatory 200 and a closet 112 located aft of the lavatory 200 that allows the PRM to transfer from the PRM mobility device 302 to the lavatory 200 while assistance is provided through standard access door 212.

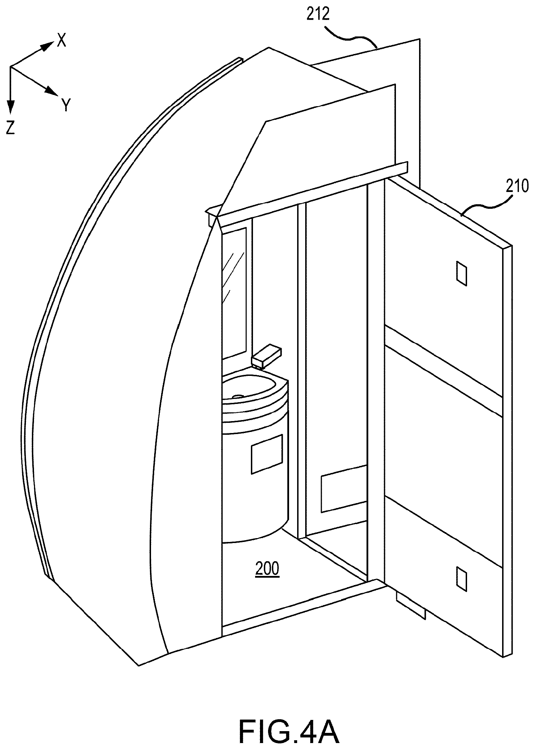

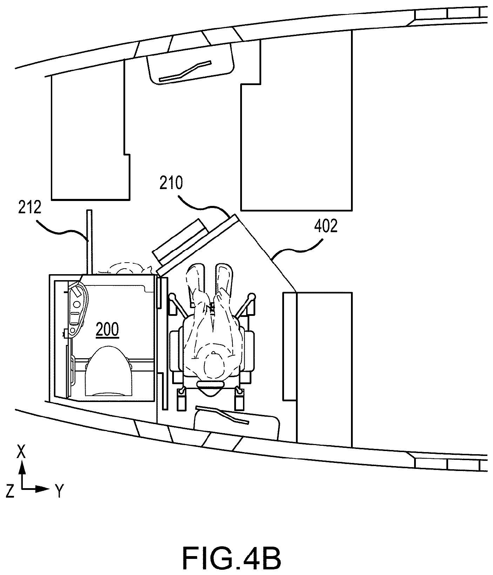

Referring now to FIGS. 4A and 4B, in accordance with various embodiments, an isometric view and a top view, respectively, of a lavatory 200 with PRM access via a PRM access door 210 is illustrated. In various embodiments, the PRM access door 210 opens by translating on a pivot, i.e. rotating, along the z-axis in a counterclockwise direction, when viewed from above, toward an interior of the aircraft. In various embodiments, the PRM access door 210 may open greater than 90-degrees in order for the PRM to move their PRM mobility device into the space between the lavatory 200 and the closet. In various embodiments, a curtain 402, shown in FIG 4B, may be mounted to the inside of the PRM access door 210, which may be deployed to attach to another location, for example, the closet 112, so as to provide a privacy shield. In various embodiments, once the PRM has moved the PRM mobility device into position within the space, the PRM access door 210 may be repositioned to a 90-degree position so as to provide a privacy shield. In that regard, when the PRM access door 210 is opened, the PRM may transfer from the PRM mobility device to the lavatory 200 via the opening provided by the PRM access door 210 while assistance is provided through standard access door 212. In various embodiments, the standard access door 212 opens by translating on a pivot, i.e. rotating, along the z-axis in a counterclockwise direction when viewed from above.

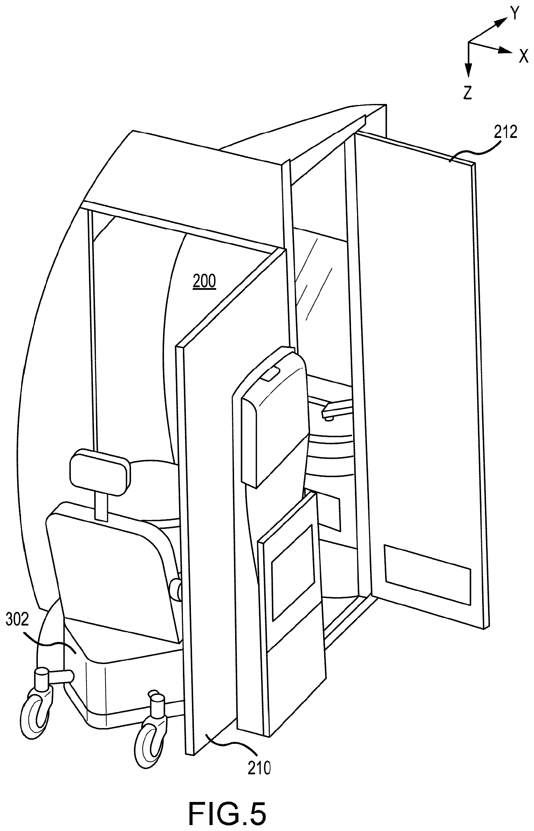

Referring now to FIG. 5, in accordance with various embodiments, an isometric view of a first positioning of a PRM mobility device 302 to access a lavatory 200 via a PRM access door 210 is illustrated. In various embodiments, the PRM may position the PRM mobility device 302 so that a front of the PRM mobility device 302 is facing the inside of the lavatory 200, while the PRM access door 210 is open, and assistance may be provided through standard access door 212.

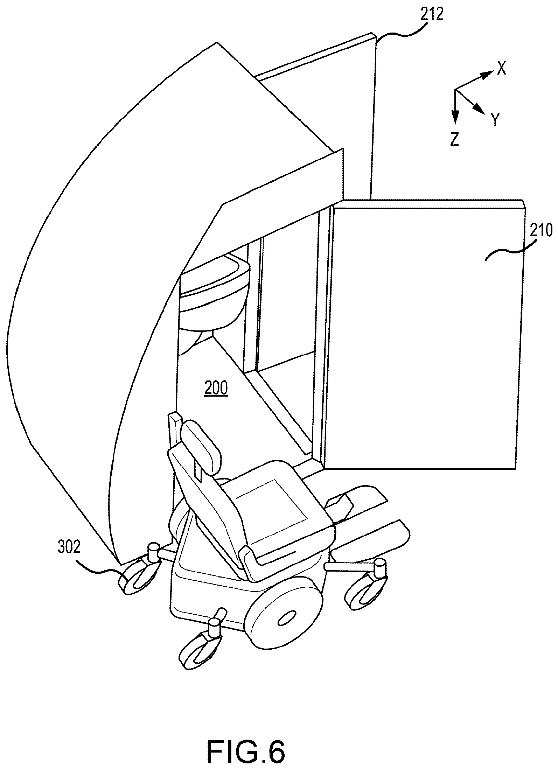

Referring now to FIG. 6, in accordance with various embodiments, an isometric view of a second positioning of a PRM mobility device 302 to access a lavatory 200 via a PRM access door 210 is illustrated. In various embodiments, the PRM may position the PRM mobility device 302 so that a side of the PRM mobility device 302 is facing the inside of the lavatory 200, while the PRM access door 210 is opened, and assistance may be provided through standard access door 212.

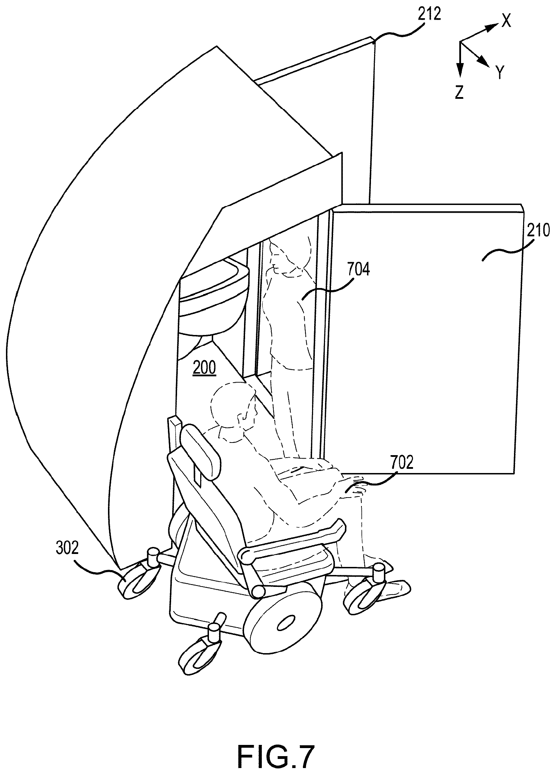

Referring now to FIG. 7, in accordance with various embodiments, an isometric view of a PRM in a PRM mobility device 302 accessing a lavatory 200 via a PRM access door 210 is illustrated. In various embodiments, the PRM 702 may position the PRM mobility device 302 so that a side of the PRM mobility device 302 is facing the inside of the lavatory 200, while the PRM access door 210 is opened. In various embodiments, a flight attendant or an assistance provider 704 may provide assistance through standard access door 212.

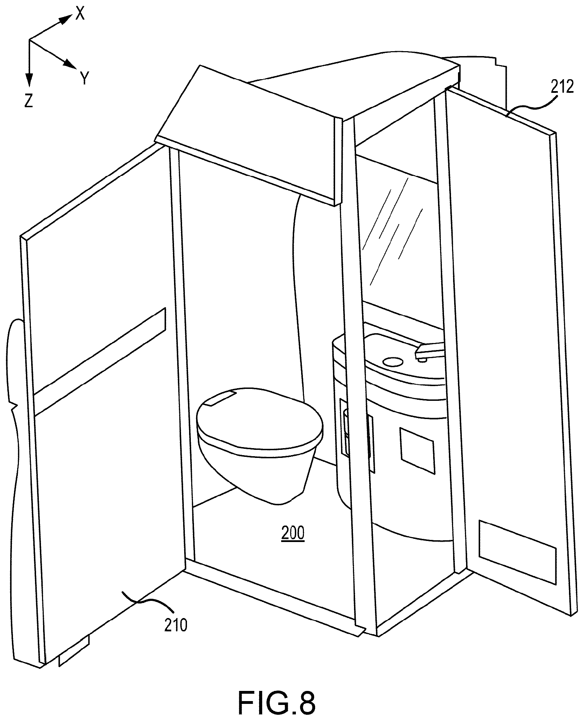

Referring now to FIG. 8, in accordance with various embodiments, an isometric view of a lavatory 200 with PRM access via a PRM access door 210 is illustrated. In various embodiments, the PRM access door 210 opens by translating on a pivot, i.e. rotating, along the z-axis in a clockwise direction when viewed from above. In various embodiments, the standard access door 212 opens by translating on a pivot, i.e. rotating, along the z-axis in a counterclockwise direction when viewed from above. In various embodiments, a curtain may be mounted to the inside of the standard access door 212, which may be deployed to attach to, for example, the closet so as to provide a privacy shield. In that regard, when the PRM access door 210 is opened, the PRM may transfer from the PRM mobility device to the lavatory 200 via the opening provided by the PRM access door 210 while assistance is provided through standard access door 212.

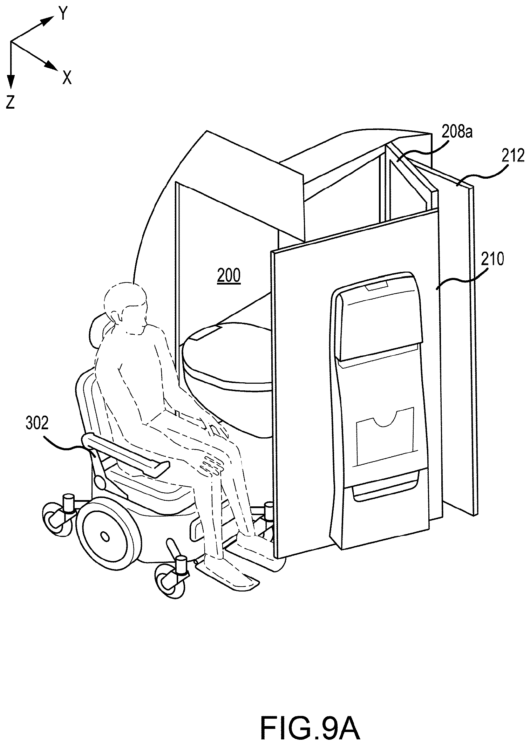

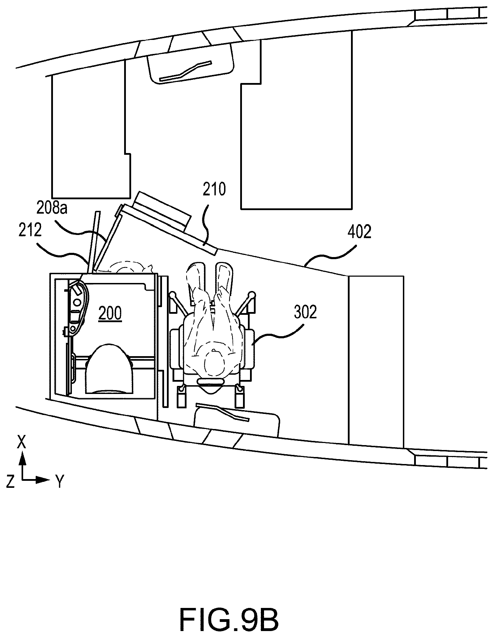

Referring now to FIGS. 9A and 9B, in accordance with various embodiments, an isometric view and a top view, respectively, of a lavatory 200 with PRM access via a PRM access door 210 is illustrated. The PRM access door 210 is coupled perpendicularly to the wall 208a in which the standard access door 212 is located. When opened, the PRM access door 210 and the wall 208a open as a single unit translating on a pivot, i.e. rotating, along the z-axis in a counterclockwise direction when viewed from above. In various embodiments, a curtain 402, shown in FIG. 9B, may be mounted to the inside of the PRM access door 210, which may be deployed to attach to, for example, the closet so as to provide a privacy shield. In that regard, when the PRM access door 210 is opened, the PRM may transfer from the PRM mobility device 302 to the lavatory 200 via the opening provided by the PRM access door 210 while assistance is provided through standard access door 212. In various embodiments, the standard access door 212 opens by translating on a separate pivot, i.e. rotating, along the z-axis in a counterclockwise direction when viewed from above, the separate pivot being from the pivot that the PRM access door 210 and wall 208a utilizes.

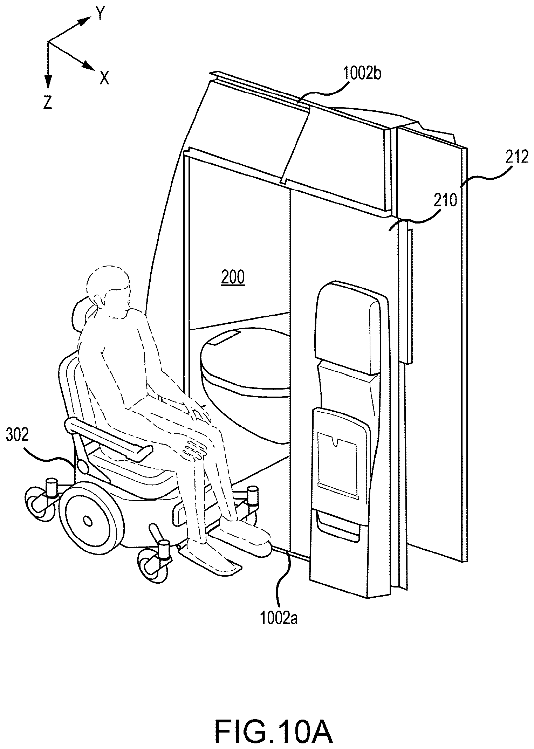

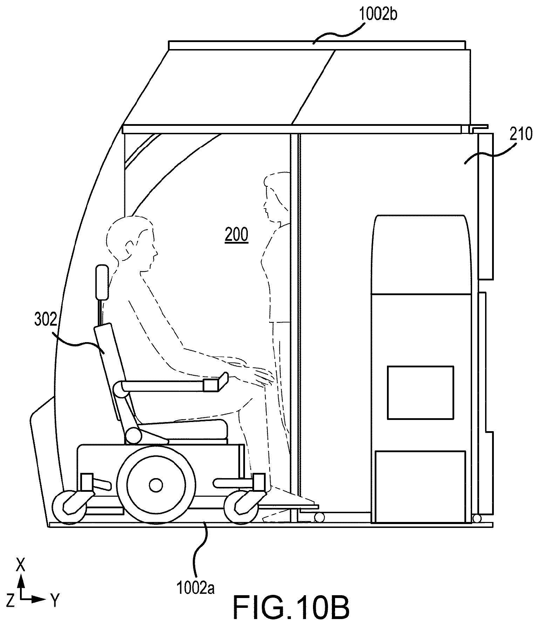

Referring now to FIGS. 10A and 10B, in accordance with various embodiments, an isometric view and a side view, respectively, of a lavatory 200 with PRM access via a PRM access door 210 is illustrated. In various embodiments, the PRM access door 210 translates in an x-direction on a linear slide mechanism toward a center of the aircraft. In various embodiments, the linear slide mechanism utilizes a set of rails, with a first rail 1002a coupled to the floor of the aircraft and a second rail 1002b coupled to the ceiling of the aircraft. In various embodiments, the set of rails are attached to the aircraft separate from the lavatory 200. In various embodiments, the linear slide mechanism utilizes only the second rail 1002b coupled to the ceiling of the aircraft. In that regard, when the PRM access door 210 is opened, the PRM may transfer from the PRM mobility device 302 to the lavatory 200 via the opening provided by the PRM access door 210 while assistance is provided through standard access door 212.

While only a few mechanisms for opening the PRM access door have been illustrated, the various embodiments are not limited to only those example. That is, other mechanisms may be utilized, such as translating the PRM access door via a 4-bar mechanism, via a live hinge, or via an articulating linkage.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different crosshatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts, insofar as they fall within the scope of the appended claims. Although various embodiments have been disclosed and described, one of ordinary skill in this art would recognize that certain modifications would come within the scope of this disclosure, insofar as they fall within the scope of the appended claims. Accordingly, the description is not intended to be exhaustive or to limit the principles described or illustrated herein to any precise form. Many modifications and variations are possible in light of the above teaching, insofar as they fall within the scope of the appended claims.

## Claims

1. An aircraft lavatory for an aircraft, comprising:
a standard access door (212) providing standard access to the aircraft lavatory from an aisle, cross aisle, or passageway of the aircraft; and
a persons with reduced mobility, PRM, access door (210) providing PRM access to the aircraft lavatory from a space adjacent to the aisle, cross aisle, or passageway,
wherein, responsive to the PRM access door (210) being opened, the PRM access door (210) is configured to provide a first opening for a person with reduced mobility to move from a PRM mobility device located in the space adjacent to the aisle, cross aisle, or passageway into the aircraft lavatory, and
wherein, responsive to the PRM access door (210) being opened, the standard access door (212) is configured to provide a second opening for assistance to be provided to the person with reduced mobility, **characterized in that**:
the PRM access door (210) is coupled to a wall in which the standard access door (212) is located and wherein the PRM access door (210) and the wall open together as a single unit rotating about an axis toward an interior of the aircraft.

2. The aircraft lavatory of claim 1, wherein the PRM access door (210) is located in a first wall perpendicular to a second wall in which the standard access door (212) is located.

3. The aircraft lavatory of claim 1 or 2, wherein a width of the PRM access door (210) is between 50 and 90 percent of a width of a wall in which the PRM access door (210) is located.

4. The aircraft lavatory of any preceding claim, wherein control of access to the PRM access door (210) is limited to a flight attendant or other qualified personnel.

5. The aircraft lavatory of any preceding claim, wherein the PRM access door (210) includes a discrete latching mechanism.

6. The aircraft lavatory of any preceding claim, wherein the PRM access door (210) opens by rotating about an axis toward an interior of the aircraft.

7. The aircraft lavatory of any of claims 1-5, wherein the PRM access door (210) opens by rotating about an axis toward an exterior of the aircraft.

8. The aircraft lavatory of any preceding claim, wherein the PRM access door (210) opens by translating on one or more rails toward a center of the aircraft.

9. The aircraft lavatory of any preceding claim, wherein the PRM access door (210) further comprises a curtain (402) that extends to another location on the interior of the aircraft thereby providing a privacy shield for the person with reduced mobility.

10. An aircraft, comprising:
at least one lavatory, wherein the at least one lavatory comprises an aircraft lavatory as claimed in any preceding claim.

## Patentansprüche

1. Flugzeugtoilette für ein Flugzeug, umfassend:
eine Standardzugangstür (212), die einen Standardzugang zur Flugzeugtoilette von einem Gang, Quergang oder Durchgang des Flugzeugs bietet; und
eine Zugangstür für Personen mit eingeschränkter Mobilität, PRM, (210), die einen PRM-Zugang zur Flugzeugtoilette von einem Raum angrenzend an den Gang, Quergang oder Durchgang bietet,
wobei, als Reaktion auf das Öffnen der PRM-Zugangstür (210), die PRM-Zugangstür (210) konfiguriert ist, eine erste Öffnung bereitzustellen, damit sich eine Person mit eingeschränkter Mobilität von einer im Raum angrenzend an den Gang, Quergang oder Durchgang befindlichen PRM-Mobilitätsvorrichtung in die Flugzeugtoilette bewegen kann, und
wobei, als Reaktion auf das Öffnen der PRM-Zugangstür (210), die Standardzugangstür (212) konfiguriert ist, eine zweite Öffnung für Hilfeleistung bereitzustellen, die der Person mit eingeschränkter Mobilität geleistet wird, **dadurch gekennzeichnet, dass**:
die PRM-Zugangstür (210) mit einer Wand gekoppelt ist, in der sich die Standardzugangstür (212) befindet, und wobei sich die PRM-Zugangstür (210) und die Wand zusammen als eine einzige Einheit öffnen, die sich um eine Achse in Richtung eines Inneren des Flugzeugs dreht.

2. Flugzeugtoilette nach Anspruch 1, wobei sich die PRM-Zugangstür (210) in einer ersten Wand befindet, die senkrecht zu einer zweiten Wand steht, in der sich die Standardzugangstür (212) befindet.

3. Flugzeugtoilette nach Anspruch 1 oder 2, wobei eine Breite der PRM-Zugangstür (210) zwischen 50 und 90 Prozent einer Breite einer Wand beträgt, in der sich die PRM-Zugangstür (210) befindet.

4. Flugzeugtoilette nach einem der vorhergehenden Ansprüche, wobei die Steuerung des Zugangs zur PRM-Zugangstür (210) auf einen Flugbegleiter oder anderes qualifiziertes Personal beschränkt ist.

5. Flugzeugtoilette nach einem der vorhergehenden Ansprüche, wobei die PRM-Zugangstür (210) einen separaten Verriegelungsmechanismus beinhaltet.

6. Flugzeugtoilette nach einem der vorhergehenden Ansprüche, wobei sich die PRM-Zugangstür (210) durch Drehen um eine Achse in Richtung eines Inneren des Flugzeugs öffnet.

7. Flugzeugtoilette nach einem der Ansprüche 1-5, wobei sich die PRM-Zugangstür (210) durch Drehen um eine Achse in Richtung eines Äußeren des Flugzeugs öffnet.

8. Flugzeugtoilette nach einem der vorhergehenden Ansprüche, wobei sich die PRM-Zugangstür (210) durch Verschieben auf einer oder mehreren Schienen in Richtung einer Mitte des Flugzeugs öffnet.

9. Flugzeugtoilette nach einem der vorhergehenden Ansprüche, wobei die PRM-Zugangstür (210) ferner einen Vorhang (402) umfasst, der sich zu einer anderen Stelle im Inneren des Flugzeugs erstreckt und dadurch einen Sichtschutz für die Person mit eingeschränkter Mobilität bietet.

10. Flugzeug, umfassend:
mindestens eine Toilette, wobei die mindestens eine Toilette eine Flugzeugtoilette nach einem der vorhergehenden Ansprüche umfasst.

## Revendications

1. Bloc toilettes d'aéronef pour un aéronef, comprenant :
une porte d'accès standard (212) fournissant un accès standard au bloc toilettes d'aéronef depuis une allée, une allée transversale ou une voie de passage de l'aéronef ; et
une porte d'accès pour personnes à mobilité réduite (PMR) (210) fournissant un accès des PMR au bloc toilettes d'aéronef depuis un espace adjacent à l'allée, à l'allée transversale ou à la voie de passage,
dans lequel, en réponse à l'ouverture de la porte d'accès PMR (210), la porte d'accès PMR (210) est configurée pour fournir une première ouverture permettant à une personne à mobilité réduite de se déplacer depuis un dispositif de mobilité PMR situé dans l'espace adjacent à l'allée, à l'allée transversale ou à la voie de passage vers le bloc toilettes d'aéronef, et
dans lequel, en réponse à l'ouverture de la porte d'accès PMR (210), la porte d'accès standard (212) est configurée pour fournir une seconde ouverture pour une fourniture d'assistance à la personne à mobilité réduite, **caractérisé en ce que** :
la porte d'accès PMR (210) est couplée à une paroi dans laquelle est située la porte d'accès standard (212) et dans lequel la porte d'accès PMR (210) et la paroi s'ouvrent ensemble comme une seule unité tournant autour d'un axe vers un intérieur de l'aéronef.

2. Bloc toilettes d'aéronef selon la revendication 1, dans lequel la porte d'accès PMR (210) est située dans une première paroi perpendiculaire à une seconde paroi dans laquelle est située la porte d'accès standard (212).

3. Bloc toilettes d'aéronef selon la revendication 1 ou 2, dans lequel une largeur de la porte d'accès PMR (210) est comprise entre 50 et 90 pour cent d'une largeur d'une paroi dans laquelle la porte d'accès PMR (210) est située.

4. Bloc toilettes d'aéronef selon une quelconque revendication précédente, dans lequel le contrôle d'accès à la porte d'accès PMR (210) est limité à un agent de bord ou à un autre personnel qualifié.

5. Bloc toilettes d'aéronef selon une quelconque revendication précédente, dans lequel la porte d'accès PMR (210) comporte un mécanisme de verrouillage discret.

6. Bloc toilettes d'aéronef selon une quelconque revendication précédente, dans lequel la porte d'accès PMR (210) s'ouvre en tournant autour d'un axe vers un intérieur de l'aéronef.

7. Bloc toilettes d'aéronef selon l'une quelconque des revendications 1 à 5, dans lequel la porte d'accès PMR (210) s'ouvre en tournant autour d'un axe vers un extérieur de l'aéronef.

8. Bloc toilettes d'aéronef selon une quelconque revendication précédente, dans lequel la porte d'accès PMR (210) s'ouvre en se déplaçant par translation sur un ou plusieurs rails vers un centre de l'aéronef.

9. Bloc toilettes d'aéronef selon une quelconque revendication précédente, dans lequel la porte d'accès PMR (210) comprend également un rideau (402) qui se prolonge jusqu'à un autre emplacement à l'intérieur de l'aéronef, fournissant ainsi un écran de confidentialité pour la personne à mobilité réduite.

10. Aéronef, comprenant :
au moins un bloc toilettes, dans lequel l'au moins un bloc toilettes comprend un bloc toilettes d'aéronef selon une quelconque revendication précédente.
